# EUROPEAN PATENT SPECIFICATION

(11) **EP 3 627 187 B1**
(45) Date of publication and mention of the grant of the patent: **03.08.2022**
(21) Application number: 18195247.4
(22) Date of filing: 18.09.2018
(51) Int. Cl.: G01S 17/93, G08G 1/16, G05D 1/02, G01S 13/86, G01S 13/931, G01S 17/931, B60W 30/09, G01S 17/87, G01S 13/87

(54) **CONTROL SYSTEM FOR AUTONOMOUS DRIVING OF A VEHICLE**
STEUERUNGSSYSTEM ZUM AUTONOMEN FAHREN EINES FAHRZEUGS
SYSTÈME DE COMMANDE POUR LA CONDUITE AUTONOME D'UN VÉHICULE

(43) Date of publication of application: 25.03.2020
(73) Proprietor: KNORR-BREMSE Systeme für Nutzfahrzeuge GmbH, 80809 München (DE)
(72) Inventor: NEMETH, Huba, 1116 Budapest (HU); TIHANYI, Viktor, 1032 Budapest (HU); DANOS, Laszlo, 7621 Pécs (HU); ANDRAS, Szappanos, 2093 Budajeno (HU); HORVATH, Csaba, 2051 Biatorbagy (HU)
(74) Representative: Prüfer & Partner mbB Patentanwälte · Rechtsanwälte

(56) References cited:
- EP-A1- 2 216 222
- EP-A1- 3 293 543
- EP-A1- 3 355 293
- DE-A1-102013 113 685
- DE-A1-102016 116 859
- US-A1- 2017 025 019

## Description

The invention relates to a control system for autonomous driving of a vehicle, in particular to a control system for autonomous driving of a transport vehicle, as e.g. a truck and trailer combination.

The autonomous operation of transport vehicles is a new field of inventions. Highly sophisticated functions require high-end hardware infrastructure including different types of sensors and perception technologies. Until now, SAE Automation level 2 systems require presence and attention of a driver. SAE Automation level 3 systems should manage autonomous driving without continuous attention of the driver. In this case, an incident may occur when an element of the system malfunctions or becomes offline.

Document EP 3 293 543 A1 discloses an apparatus for sensing a vehicular environment when fitted to a vehicle, the apparatus comprising a control system having the features according to the preamble of claim 1 partially comprising redundant elements.

Until now, in particular in the field of commercial vehicles and trucks, no safe solution or consideration which is able to handle such a situation and which is able to carry out minimal risk safety manoeuvre even after a partial malfunction has been known.

Therefore, the object underlying the invention is to enable a more secure safeoperation of autonomously driving vehicle.

The object is achieved by a control system according to claim 1. Advantageous further developments are included in the dependent claims.

According to an aspect of the invention, a control system for autonomous driving of a vehicle comprises a first radar sensor device attached at a front side of the vehicle such that it looks forward, a second radar sensor device attached at the front side of the vehicle such that it looks forward, a third radar sensor device attached at a first lateral side of the vehicle such that it looks sideward, a fourth radar sensor device attached at a second lateral side of the vehicle such that it looks sideward, a fifth radar sensor device attached at the first lateral side of the vehicle such that it looks rearward, a sixths radar sensor device attached the second lateral side of the vehicle such that it looks rearward, a first camera sensor device attached at the front side of the vehicle such that it looks forward, a second camera sensor device attached at the front side of the vehicle such that it looks forward, a third camera sensor device attached at the first lateral side of the vehicle such that it looks rearward, and a fourth camera sensor device attached at the second lateral side of the vehicle such that it looks rearward, wherein the first radar sensor device and the second radar sensor device are configured to be supplied by battery circuits independent from each other such as to be redundant devices, and the first camera sensor device and the second camera sensor device are configured to be supplied by battery circuits independent from each other such as to be redundant devices.

By such a configuration of the control system, wherein several sensors simultaneously observe a same direction of the vehicle, a redundant environment sensor architecture as a part of a redundant hardware architecture that can fulfil the requirement to carry out minimal risk safety manoeuvre even after a partial malfunction is provided. Based on this idea, main and backup circuits are differentiated with their own power supply sources, and appropriate sensors are doubled into redundant pairs.

In an advantageous implementation of the control system, the third radar sensor device is attached at a lateral driver side of the vehicle such that it looks sideward, at least two fourth radar sensor devices attached at a lateral co-driver side of the vehicle such that they look sideward are provided, the fifth radar sensor device is attached at the lateral driver side of the vehicle such that it looks rearward, and at least two sixth radar sensor devices attached at the lateral co-driver side of the vehicle such that they look rearward are provided, wherein at least one of the at least two fourth radar sensor devices is configured to be supplied by a battery circuit independent from the battery circuit of another one of the at least two fourth radar sensor devices such as to be redundant devices, and at least one of the at least two sixths radar sensor devices is configured to be supplied by a battery circuit independent from the battery circuit of another one of the at least two sixths radar sensor devices such as to be redundant devices.

Compared to the control system according the aspect of the invention, this control system is able to provide an in-lane minimal risk manoeuvre or co-driver side direction lane change minimal risk manoeuver in most of the cases.

In an advantageous implementation of the control system, the control system further comprises a first fisheye lens camera sensor device attached at a first front corner of the vehicle such that it looks downward, and a second fisheye lens camera sensor device attached at a second front corner of the vehicle such that it looks downward.

By providing these camera sensor devices, monitoring and object detection in a direct proximity of the vehicle not covered by front or rear far field sensors is possible.

In an advantageous implementation of the control system, the third camera sensor device is attached at the lateral driver side of the vehicle such that it looks rearward, and at least two fourth camera sensor devices attached at the lateral co-driver side of the vehicle such that they look rearward are provided, the first fisheye lens camera sensor device is attached at a driver side front corner of the vehicle such that it looks downward, and at least two second fisheye lens camera sensor devices attached at a co-driver side front corner of the vehicle such that they look downward are provided, wherein at least one of the at least two fourth camera sensor devices is configured to be supplied by a battery circuit independent from the battery circuit of another one of the at least two fourth camera sensor devices such as to be redundant devices, and at least one of the at least two second fisheye lens camera sensor devices is configured to be supplied by a battery circuit independent from the battery circuit of another one of the at least two second fisheye lens camera sensor devices such as to be redundant devices.

Du to this configuration, proving an in-lane minimal risk manoeuver or a co-driver side direction lane change minimal risk manoeuver in all cases is possible.

In a further advantageous implementation of the control system, it further comprises a first rotational Lidar sensor device attached at the first lateral side of the vehicle and a second rotational Lidar sensor device attached at the second lateral side of the vehicle, wherein the first rotational Lidar sensor device and the second rotational Lidar sensor device are respectively configured to look sideward and forward.

By these wide angle rotational Lidar sensor devices, in particular at each frontal side of the vehicle, monitoring objects in close proximity at both sides and at the front side, detecting a hazardous object in close proximity with high confidence, and providing a 3 D representation of the surrounding environments are possible.

In another advantageous implementation of the control system, it further comprises three solid state Lidar sensor devices, respectively one solid state Lidar device being attached at the first lateral side, at the front side of the vehicle, and at the second lateral side.

Due to this configuration, monitoring objects in close proximity at both sides and at the front side, detecting a hazardous object in close proximity with high confidence, and providing a 3 D representation of the surrounding environments are also possible.

In a further advantageous implementation of the control system, it further comprises a seventh radar sensor device attached at the vehicle such that it looks rearward below the vehicle.

Because of the provision of this radar sensor device, also the portion of environments directly behind the vehicle can be monitored.

In a further advantageous implementation of the control system, it further comprises an ultrasonic sensor device attached at a front side of the vehicle such that it looks forward.

When providing this ultrasonic sensor device, near field object proximity detection is possible.

In a further advantageous implementation of the control system, it further comprises an eighth radar sensor device and a ninth radar sensor device both being attached to the front side of the vehicle such that they look forward at a wide angle.

By providing these wide angle forward looking radar, detection in a wide field in front of the vehicle is possible especially in bad weather conditions.

In a further advantageous implementation of the control system, the control system is configured to use object information detected by the sensor devices to decelerate or to stop the vehicle, or to execute a lane change with the vehicle, when an object is detected in a specific field of view of the sensor devices.

By this use, autonomous driving of a vehicle even in hazardous situations, is possible.

In the following, the invention is elucidated by means of embodiments referring to the attached drawings.

In particular,
- Fig. 1: shows a vehicle including a first implementation of a control system according to the invention;
- Fig. 2: shows fields of view of sensor devices of the control system of Fig. 1;
- Fig. 3: shows the vehicle including a second implementation of the control system;
- Fig. 4: shows fields of view of the sensor devices of the control system of Fig. 3;
- Fig. 5: shows the vehicle including a third implementation of the control system; and
- Fig. 6: shows fields of view of the sensor devices of the control system of Fig. 5.

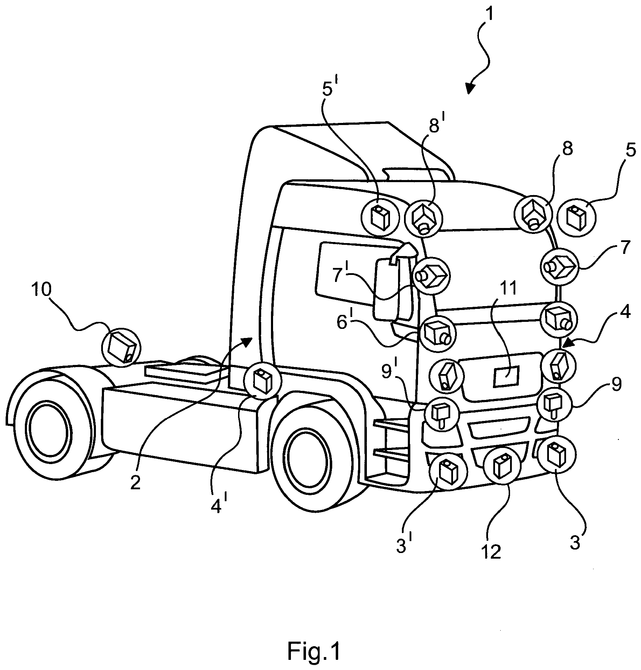

**Fig.** 1 shows a first implementation of a vehicle 1 including a control system 2 according to the invention. In this implementation, the vehicle 1 is a tractor of a trailer truck, however, any appropriate vehicle can be equipped with the control system 2.

The control system 2 is provided with a redundant environment sensor architecture as a part of a redundant hardware architecture. Based on this idea, main circuits including main sensor devices and backup circuits, which are less sophisticated circuits, including backup sensor devices are differentiated. The main sensors provide data that enable the vehicle to drive in an autonomous manner. The backup sensors provide data enabling the vehicle 1 to perform a safety manoeuver and, therefore, the vehicle 1 can perform a necessary safety manoeuver if either circuit fails.

As the main sensors, the control system 2 comprises a first radar sensor device 3 attached at a front side of the vehicle 1 such that it looks forward (FLR), a third radar sensor device 4 attached at a first lateral side of the vehicle 1 such that it looks sideward (SLR) and a fourth radar sensor device 4' attached at a second lateral side of the vehicle 1 such that it looks sideward (SLR), a fifth radar sensor device 5 attached at the first lateral side of the vehicle 1 such that it looks rearward (RLR) and a sixth radar sensor device 5' (RLR) attached at the second lateral side of the vehicle 1 such that it looks rearward, a first camera sensor device 6 attached at the front side of the vehicle 1 such that it looks forward (FLC), a third camera sensor device 7 attached at the first lateral side of the vehicle 1 such that it looks rearward (RLC), and a fourth camera sensor device 7' attached the second lateral side of the vehicle 1 such that it looks rearward (RLC).

Moreover, as backup sensors, the control system 2 comprises a second radar sensor device 3' attached at the front side of the vehicle such that it looks forward (FLR), and a second camera sensor device 6' attached at the front side of the vehicle 1 such that it looks forward (FLC).

The first radar sensor device 3 (FLR) and the second radar sensor device 3' (FLR) are configured to be supplied by battery circuits independent from each other such as to be redundant devices, and the first camera sensor device 6 (FLC) and the second camera sensor device 6' (FLC) are configured to be supplied by battery circuits independent from each other such as to be redundant devices.

Further, the control system 2 comprises a first fisheye lens camera sensor device 8 (DCC) attached at a first front corner of the vehicle 1 such that it looks downward and a second fisheye lens camera sensor device 8' (DCC) attached at a second front corner of the vehicle 1 such that it looks downward. In alternative implementations, the control system 2 is not provided with the fisheye lens camera sensors 8, 8' or the camera devices are not provided with fisheye lenses but with another suitable sensor.

Furthermore, the control system 2 comprises a first rotational Lidar sensor device 9 (FLL) attached at the first lateral side of the vehicle 1 and a second rotational Lidar sensor device 9' (FLL) attached at the second lateral side of the vehicle 1. In alternative implementations, the rotational Lidar sensor devices 9, 9' can respectively be replaced by three solid state Lidar sensor devices, respectively being placed at the first lateral side, at the front side of the vehicle, and at the second lateral side. In further alternative implementations, the Lidar sensor devices can be omitted.

Moreover, the control system 2 is provided with a seventh radar sensor device 10 attached at the vehicle such that it looks rearward below the vehicle.

The control system 2 is also provided with an ultrasonic sensor device 11 attached at a front side of the vehicle 1 such that it looks forward and with an eights radar sensor device 12 attached to the front side of the vehicle such that it looks forward at a wide angle.

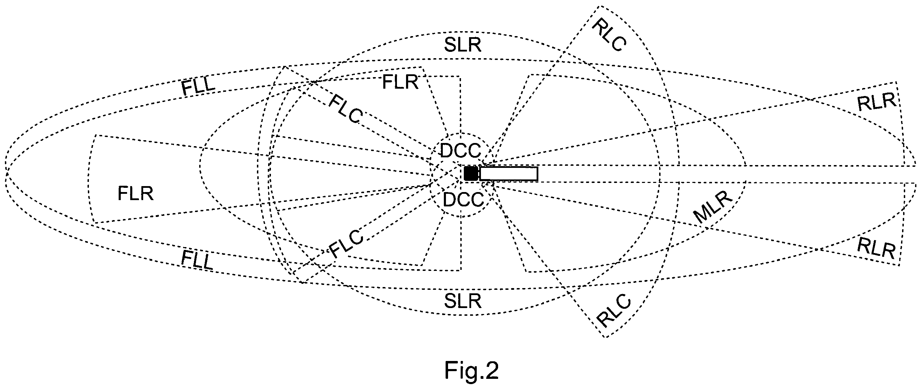

**Fig. 2** shows fields of view of the sensor devices of the control system of Fig. 1.

A narrow field FLR (Forward Looking Radar) indicates a fields of view of the first and second radar sensor devices (far field Forward Looking Radar sensor devices) 3, 3' and a broad field FLR indicates a field of view of the eights radar sensor device (wide angle Forward Looking Radar sensor device) 12 for in lane objects detection especially in bad weather conditions.

Fields SLR (Side Looking Radar) indicate fields of view of the third and fourth radar sensor devices (wide angle Side Looking Radar sensor devices) 4, 4' at each side of the vehicle 1 for monitoring and object detection in the neighbouring lanes in the close proximity of the vehicle 1.

Two narrow fields RLR (Rear Looking Radar) indicate fields of view of the fifth and sixth radar sensor devices (far field Rear Looking Radar sensor devices) 5, 5' for monitoring and object detection in the neighbouring lanes in the far field of the vehicle 1, especially in bad weather conditions.

Two fields FLC (Forward Looking Camera) indicate fields of view of the first and second camera sensor devices (far field Forward Looking Camera sensor devices) 6, 6' for detection of lane markings, in lane objects, peer-vehicle detection in surrounding lanes, traffic signs, and road infrastructure elements. The forward looking camera sensor device 6' merely detects lane marking and in lane objects.

Two fields RLC (Rear Looking Camera) indicate fields of view of the third and fourth camera sensor devices (far field Rear Looking Camera sensor devices) 7, 7' for monitoring and object detection in neighbouring lanes in the far field of the vehicle 1. Two fields DCC (Downward looking Corner Camera) indicate fields of view of the first and second fist eye lens camera sensor device (Downward looking Corner Camera sensor device) 8, 8' for monitoring and object detection in the direct proximity of the vehicle not covered by the front and rear far field sensor fields FLC, FLR, RLC and RLR.

Field MLR (Mid Lower Radar) indicates a field of view of the seventh radar sensor device (Mid Lower Radar sensor device) 10 for coverage of rear field of the vehicle 1 and looking underfloor of the vehicle 1.

Fields FLL (Far Field Lidar) indicate fields of view of the first and second rotational Lidar sensor devices 9, 9' for monitoring objects in near proximity at both sides of the vehicle 1, detecting hazardous objects in near proximity with high confidence, and providing a 3 D representation of the surrounding environments.

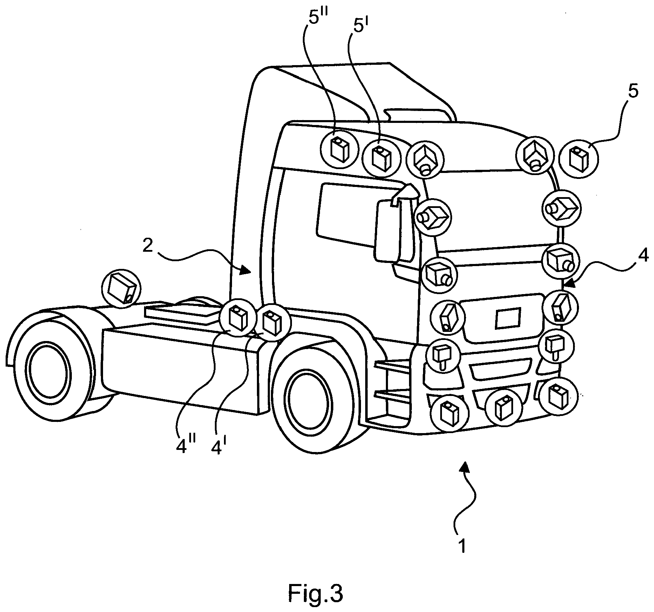

**Fig. 3** shows the vehicle 1 including a second implementation of the control system 2.

The control system 2 of this implementation has the same main sensors as the implementation shown in Fig. 1 and Fig. 2. In a backup sensor cluster, third radar sensor device (wide angle Side Looking Radar sensor device) 4 (SLR) is provided at the lateral driver side and, additionally to the implementations shown in Fig. 1 and Fig. 2, at the co-driver side, the fourth radar sensor device (wide angle Side Looking Radar sensor device) 4' (SLR) is doubled to a further wide angle Side Looking Radar sensor device 4" (+SLR). At the lateral driver side, the fifth radar sensor device (far field Rear Looking Radar sensor device) 5 (RLR) is provided and, at the co-driver side, the sixth radar sensor device (far field Rear Looking Radar sensor device) 5' (RLR) is doubled to a further far field Rear Looking Radar sensor device 5" (+RLR). This provides backup sensor devices for proving an in-lane minimal risk manoeuver or a co-driver side direction lane change minimal risk manoeuver in most of the cases.

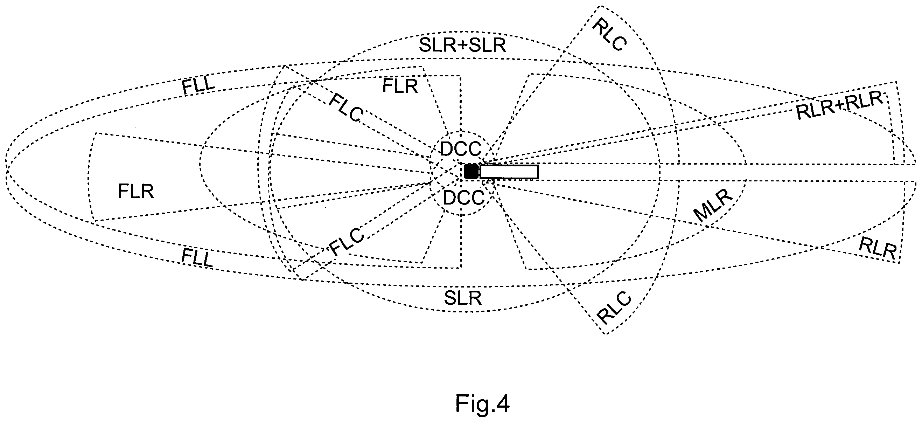

**Fig. 4** shows fields of view of the sensor devices of the control system 2 of Fig. 3.

In the Fig. 4, except from the fields of view FLR, FLL, FLC, SLR, DCC, RLC, MLR and RLR already depicted in Fig. 2, additional fields of view "+SLR" and "+RLR" are provided by the redundant sensor devices 4" and 5".

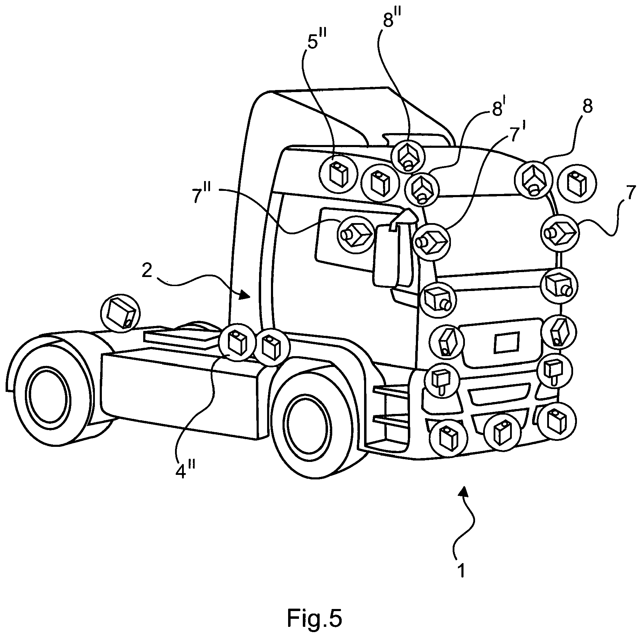

**Fig.** 5 shows the vehicle 1 including a third implementation of the control system 2.

The control system 2 of this implementation has the same main sensors as the implementation shown in Fig. 3 and Fig. 4. In a backup sensor cluster, the third camera sensor device (far field rear looking camera sensor device) 7 (RLC) and the first fisheye lens camera sensor device) downward looking corner camera sensor device 8 (DCC) are provided at the lateral driver side of the vehicle 1 and, additionally to the sensor devices 4", 5" of the second implementation shown in Fig. 3 and Fig. 4, on the co-driver side, the fourth camera sensor device (far field rear looking camera sensor device) 7' (RLC) and the optional second fisheye lens camera sensor device (downward looking corner camera sensor device) 8' (DCC) are doubled to a further far field rear looking camera sensor device 7" (+RLC) and a further downward looking corner camera sensor device 8" (+DCC) as being provided as backup sensor devices for proving an in-lane minimal risk manoeuver or a co-driver side direction lane change minimal risk manoeuver in all cases.

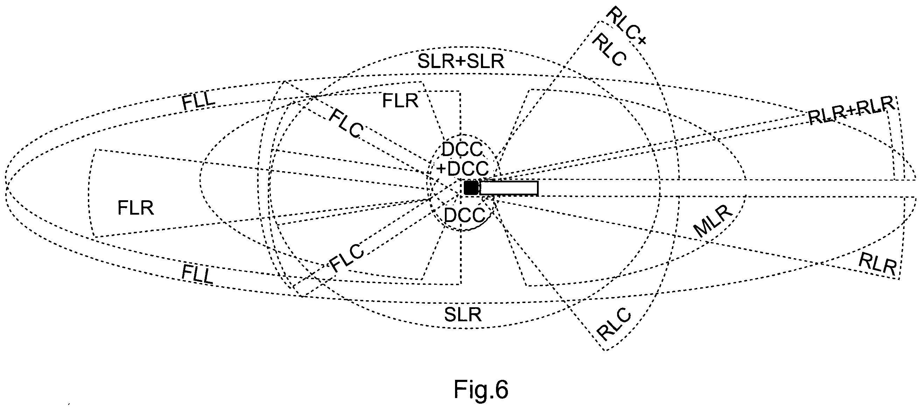

**Fig.** 6 shows fields of view of the sensor devices of the control system of Fig. 5.

In the Fig. 6, except from the fields of view FLR, FLL, FLC, SLR, DCC, RLC, MLR and RLR and the additional fields of view "+SLR" and "+RLR" of the second implementation shown in Fig. 4, additional fields "+RLC" and "+DCC" are provided by the redundant sensor devices 4" and 8".

In use, the present sensor devices capture vehicular environment scene data. The main sensor devices provide first vehicular scene data to a first processing unit for determining first vehicular control data on the basis of the first vehicular scene data for enabling the vehicle to drive in an autonomous manner. The backup sensor devices provide second vehicular scene data to a second processing unit for determining second vehicular control data on the basis of the second vehicular scene data to perform a safety manoeuver.

Although the present invention has been described with reference to specific features and implementation thereof, it is evident that various modifications and combinations can be made thereto without departing from the scope of the claimed invention. The specification and drawings are, accordingly, to be regarded simply as an illustration of the invention as defined by the appended claims, and are contemplated to cover any and all modifications, variations combinations or equivalents that fall within the scope of the claimed invention.

### REFERENCE SIGN LIST

- 1: vehicle
- 2: control system
- 3: first radar sensor device (FLR)
- 3': second radar sensor device (FLR)
- 4: third radar sensor device (SLR)
- 4': fourth radar sensor device (SLR)
- 4": double of fourth radar sensor device (+SLR)
- 5: fifth radar sensor device (RLR)
- 5': sixths radar sensor device (RLR)
- 5": double of sixth radar sensor device (+RLR)
- 6: first camera sensor device (FLC)
- 6': second camera sensor device (FLC)
- 7: third camera sensor device (RLC)
- 7': fourth camera sensor device (RLC)
- 7": double of fourth camera sensor device (+RLC)
- 8: first fisheye lens camera sensor device (DCC)
- 8': second fisheye lens camera sensor device (DCC)
- 8": double of second fisheye lens camera sensor device (+DCC)
- 9: first rotational Lidar sensor device (FLL)
- 9': second rotational Lidar sensor device (FLL)
- 10: seventh radar sensor device (MLR)
- 11: ultrasonic sensor device
- 12: eights radar sensor device

## Claims

1. A control system (2) for autonomous driving of a vehicle (1), comprising
a first radar sensor device (3) as a main sensor device attached at a front side of the vehicle (1) such that it looks forward,
a second radar sensor device (3') as a backup sensor device attached at the front side of the vehicle (1) such that it looks forward,
a third radar sensor device (4) as a main sensor device attached at a first lateral side of the vehicle (1) such that it looks sideward,
a fourth radar sensor device (4') as a main sensor device attached at a second lateral side of the vehicle (1) such that it looks sideward,
a fifth radar sensor device (5) as a main sensor device attached at the first lateral side of the vehicle (1) such that it looks rearward,
a sixth radar sensor device (5') as a main sensor device attached at the second lateral side of the vehicle (1) such that it looks rearward,
a first camera sensor device (6) as a main sensor device attached at the front side of the vehicle (1) such that it looks forward,
a second camera sensor device (6') as a backup sensor device attached at the front side of the vehicle (1) such that it looks forward,
a third camera sensor device (7) as a main sensor device attached at the first lateral side of the vehicle (1) such that it looks rearward, and
a fourth camera sensor device (7') as a main sensor device attached at the second lateral side of the vehicle (1) such that it looks rearward, wherein
the first radar sensor device (3) and the second radar sensor device (3') are configured to be supplied by battery circuits independent from each other such as to be redundant devices, and
the first camera sensor device (6) and the second camera sensor device (6') are configured to be supplied by battery circuits independent from each other such as to be redundant devices,
wherein the control system (2) is provided with a main circuit including the main sensor devices and a less sophisticated backup circuit including the backup sensor devices,
**characterized in that**
the main sensor devices are configured to provide first vehicular scene data to a first processing unit for determining first vehicular control data on the basis of the first vehicular scene data for enabling the vehicle (1) to drive in an autonomous manner, and the backup sensor devices provide second vehicular scene data to a second processing unit for determining second vehicular control data on the basis of the second vehicular scene data to perform a safety manoeuver so that the vehicle (1) can perform a necessary safety manoeuver if either circuit fails.

2. The control system (2) according to claim 1, wherein
the third radar sensor device (4) is attached at a lateral driver side of the vehicle (1) such that it looks sideward,
at least two fourth radar sensor devices (4', 4") attached at a lateral co-driver side of the vehicle (1) such that they look sideward are provided,
the fifth radar sensor device (5) is attached at the lateral driver side of the vehicle such that it looks rearward,
at least two sixth radar sensor devices (5', 5") attached at the lateral co-driver side of the vehicle (1) such that they look rearward are provided, wherein
at least one of the at least two fourth radar sensor devices (4', 4") is configured to be supplied by a battery circuit independent from the battery circuit of another one of the at least two fourth radar sensor devices (4', 4") such as to be redundant devices,
at least one of the at least two sixths radar sensor devices (5', 5") is configured to be supplied by a battery circuit independent from the battery circuit of another one of the at least two sixths radar sensor devices (5', 5") such as to be redundant devices.

3. The control system (2) of claim 1 or 2, further comprising
a first fisheye lens camera sensor device (8) attached at a first front corner of the vehicle (1) such that it looks downward, and
a second fisheye lens camera sensor device (8') attached at a second front corner of the vehicle (1) such that it looks downward.

4. The control system (2) of claim 3, wherein
the third camera sensor device (7) is attached at the lateral driver side of the vehicle (1) such that it looks rearward, and
at least two fourth camera sensor devices (7', 7") attached at the lateral co-driver side of the vehicle (1) such that they look rearward are provided,
the first fisheye lens camera sensor device (8) is attached at a driver side front corner of the vehicle (1) such that it looks downward, and
at least two second fisheye lens camera sensor devices (8', 8") attached at a co-driver side front corner of the vehicle (1) such that they look downward are provided, wherein
at least one of the at least two fourth camera sensor devices (7', 7") is configured to be supplied by a battery circuit independent from the battery circuit of another one of the at least two fourth camera sensor devices (7', 7") such as to be redundant devices, and
at least one of the at least two second fisheye lens camera sensor devices (8', 8") is configured to be supplied by a battery circuit independent from the battery circuit of another one of the at least two second fisheye lens camera sensor devices (8', 8") such as to be redundant devices.

5. The control system (2) of anyone of the preceding claims, further comprising
a first rotational Lidar sensor device (9) attached at the first lateral side of the vehicle (1), and
a second rotational Lidar sensor device (9') attached at the second lateral side of the vehicle (1), wherein the first rotational Lidar sensor device (9) and the second rotational Lidar sensor device (9') are respectively configured to look sideward and forward.

6. The control system (2) of anyone of claims 1 to 4, further comprising
three solid state Lidar sensor devices, respectively one solid state Lidar device being attached at the first lateral side, at the front side of the vehicle (1), and at the second lateral side.

7. The control system (2) of anyone of the preceding claims, further comprising
a seventh radar sensor device (10) attached at the vehicle (1) such that it looks rearward below the vehicle (1).

8. The control system (2) of anyone of the preceding claims, further comprising
an ultrasonic sensor (11) device attached at a front side of the vehicle (1) such that it looks forward.

9. The control system (2) of anyone of the preceding claims, further comprising
an eighth radar sensor device (12) attached to the front side of the vehicle (1) such that it looks forward at a wide angle.

10. The control system (2) of anyone of the preceding claims, wherein
the control system (2) is configured to use object information detected by the sensor devices (3 to 12) to decelerate or to stop the vehicle (1), or to execute a lane change with the vehicle (1), when an object is detected in a specific field of view of the sensor devices.

## Patentansprüche

1. Steuerungssystem (2) zum autonomen Fahren eines Fahrzeugs (1), umfassend
eine erste Radarsensorvorrichtung (3) als Hauptsensorvorrichtung, die an einer Vorderseite des Fahrzeugs (1) so angebracht ist, dass sie nach vorne gerichtet ist,
eine zweite Radarsensorvorrichtung (3') als Reservesensorvorrichtung, die an der Vorderseite des Fahrzeugs (1) so angebracht ist, dass sie nach vorne gerichtet ist,
eine dritte Radarsensorvorrichtung (4) als Hauptsensorvorrichtung, die an einer ersten seitlichen Seite des Fahrzeugs (1) so angebracht ist, dass sie zur Seite gerichtet ist,
eine vierte Radarsensorvorrichtung (4') als Hauptsensorvorrichtung, die an einer zweiten seitlichen Seite des Fahrzeugs (1) so angebracht ist, dass sie zur Seite gerichtet ist,
eine fünfte Radarsensorvorrichtung (5) als Hauptsensorvorrichtung, die an der ersten seitlichen Seite des Fahrzeugs (1) so angebracht ist, dass sie nach hinten gerichtet ist,
eine sechste Radarsensorvorrichtung (5') als Hauptsensorvorrichtung, die an einer zweiten seitlichen Seite des Fahrzeugs (1) so angebracht ist, dass sie nach hinten gerichtet ist,
eine erste Kamerasensorvorrichtung (6) als Hauptsensorvorrichtung, die an einer Vorderseite des Fahrzeugs (1) so angebracht ist, dass sie nach vorne gerichtet ist,
eine zweite Kamerasensorvorrichtung (6') als Reservesensorvorrichtung, die an der Vorderseite des Fahrzeugs (1) so angebracht ist, dass sie nach vorne gerichtet ist,
eine dritte Kamerasensorvorrichtung (7) als Hauptsensorvorrichtung, die an der ersten seitlichen Seite des Fahrzeugs (1) so angebracht ist, dass sie nach hinten gerichtet ist, und
eine vierte Kamerasensorvorrichtung (7') als Hauptsensorvorrichtung, die an der zweiten seitlichen Seite des Fahrzeugs (1) so angebracht ist, dass sie nach hinten gerichtet ist, wobei
die erste Radarsensorvorrichtung (3) und die zweite Radarsensorvorrichtung (3') dazu ausgelegt sind, von voneinander unabhängigen Batterieschaltungen versorgt zu werden, so dass sie redundante Vorrichtungen sind, und die erste Kamerasensorvorrichtung (6) und die zweite Kamerasensorvorrichtung (6') dazu ausgelegt sind, von voneinander unabhängigen Batterieschaltungen versorgt zu werden, so dass sie redundante Vorrichtungen sind, wobei das Steuerungssystem (2) mit einer Hauptschaltung, die die Hauptsensorvorrichtungen beinhaltet, und einer weniger anspruchsvollen Reserveschaltung, die die Reservesensorvorrichtungen beinhaltet, bereitgestellt wird,
**dadurch gekennzeichnet, dass**
die Hauptsensorvorrichtungen dazu ausgelegt sind, erste Fahrzeugszenendaten an eine erste Verarbeitungseinheit bereitzustellen, um auf der Grundlage der ersten Fahrzeugszenendaten erste Fahrzeugsteuerungsdaten zu bestimmen, damit das Fahrzeug (1) in der Lage ist, autonom zu fahren, und die Reservesensorvorrichtungen zweite Fahrzeugszenendaten an eine zweite Verarbeitungseinheit bereitstellen, um auf der Grundlage der zweiten Fahrzeugszenendaten zweite Fahrzeugsteuerungsdaten zu bestimmen, um ein Sicherheitsmanöver durchzuführen, so dass das Fahrzeug (1) ein notwendiges Sicherheitsmanöver durchführen kann, wenn eine der Schaltungen ausfällt.

2. Steuerungssystem (2) nach Anspruch 1, wobei die dritte Radarsensorvorrichtung (4) ist an einer seitlichen Fahrerseite des Fahrzeugs (1) so angebracht, dass sie zur Seite gerichtet ist,
mindestens zwei vierte Radarsensorvorrichtungen (4', 4"), die seitlich an einer Beifahrerseite des Fahrzeugs (1) so angebracht sind, dass sie zur Seite gerichtet sind, bereitgestellt werden,
die fünfte Radarsensorvorrichtung (5) an der seitlichen Fahrerseite des Fahrzeugs so angebracht ist, dass sie nach hinten gerichtet ist,
mindestens zwei sechsten Radarsensorvorrichtungen (5', 5"), die seitlich an der Beifahrerseite des Fahrzeugs (1) so angebracht sind, dass sie nach hinten gerichtet sind, bereitgestellt werden, wobei
mindestens eine der mindestens zwei vierten Radarsensorvorrichtungen (4', 4") dazu ausgelegt ist, von einem Batteriestromkreis unabhängig vom Batteriestromkreis einer anderen der mindestens zwei vierten Radarsensorvorrichtungen (4', 4") versorgt zu werden, so dass sie redundante Vorrichtungen sind,
mindestens eine der mindestens zwei sechsten Radarsensorvorrichtungen (5', 5") dazu ausgelegt ist, von einem Batteriestromkreis unabhängig vom Batteriestromkreis einer anderen der mindestens zwei sechsten Radarsensorvorrichtungen (5', 5") versorgt zu werden, so dass sie redundante Vorrichtungen sind.

3. Steuerungssystem (2) nach Anspruch 1 oder 2, ferner umfassend
eine erste Kamerasensorvorrichtung (8) mit Fischaugenobjektiv, die an einer ersten vorderen Ecke des Fahrzeugs (1) so angebracht ist, dass sie nach unten gerichtet ist, und
eine zweite Kamerasensorvorrichtung (8') mit Fischaugenobjektiv, die an einer zweiten vorderen Ecke des Fahrzeugs (1) so angebracht ist, dass sie nach unten gerichtet ist.

4. Steuerungssystem (2) nach Anspruch 3, wobei die dritte Kamerasensorvorrichtung (7) an der seitlichen Fahrerseite des Fahrzeugs (1) so angebracht ist, dass sie nach hinten gerichtet ist, und
mindestens zwei vierte Kamerasensorvorrichtungen (7', 7"), die seitlich an der Beifahrerseite des Fahrzeugs (1) so angebracht sind, dass sie nach hinten gerichtet sind, bereitgestellt werden,
die erste Kamerasensorvorrichtung (8) mit Fischaugenobjektiv an einer vorderen Ecke der Fahrerseite des Fahrzeugs (1) so angebracht ist, dass sie nach unten gerichtet ist, und
mindestens zwei zweite Kamerasensorvorrichtungen (8', 8") mit Fischaugenobjektiv, die an einer vorderen Ecke der Beifahrerseite des Fahrzeugs (1) so angebracht sind, dass sie nach unten gerichtet sind, bereitgestellt sind, wobei mindestens eine der mindestens zwei vierten Kamerasensorvorrichtungen (7', 7") dazu ausgelegt ist, von einem Batteriestromkreis unabhängig vom Batteriestromkreis einer anderen der mindestens zwei vierten Kamerasensorvorrichtungen (7', 7") versorgt zu werden, so dass sie redundante Vorrichtungen sind, und mindestens eine der mindestens zwei zweiten Kamerasensorvorrichtungen (8', 8") mit Fischaugenobjektiv dazu ausgelegt ist, von einem Batteriestromkreis unabhängig vom Batteriestromkreis einer anderen der mindestens zwei zweiten Kamerasensorvorrichtungen (8', 8") mit Fischaugenobjektiv versorgt zu werden, so dass sie redundante Vorrichtungen sind.

5. Steuerungssystem (2) nach einem der vorhergehenden Ansprüche, ferner umfassend
eine erste Rotations-Lidar-Sensorvorrichtung (9), die an der ersten seitlichen Seite des Fahrzeugs (1) angebracht ist, und
eine zweite Rotations-Lidar-Sensorvorrichtung (9'), die an der zweiten seitlichen Seite des Fahrzeugs (1) angebracht ist, wobei die erste Rotations-Lidar-Sensorvorrichtung (9) und die zweite Rotations-Lidar-Sensorvorrichtung (9') jeweils dazu ausgelegt sind, zur Seite und nach vorne gerichtet zu sein.

6. Steuerungssystem (2) nach einem der Ansprüche 1 bis 4, ferner umfassend
drei Festkörper-Lidar-Sensorvorrichtungen, wobei jeweils eine Festkörper-Lidar-Vorrichtung an der ersten seitlichen Seite, an der Vorderseite des Fahrzeugs (1), und an der zweiten seitlichen Seite angebracht ist.

7. Steuerungssystem (2) nach einem der vorhergehenden Ansprüche, ferner umfassend
eine siebte Radarsensorvorrichtung (10), die am Fahrzeug (1) so angebracht ist, dass sie nach hinten unter das Fahrzeug (1) gerichtet ist.

8. Steuerungssystem (2) nach einem der vorhergehenden Ansprüche, ferner umfassend
eine Ultraschallsensorvorrichtung (11), die an einer Vorderseite des Fahrzeugs (1) so angebracht ist, dass sie nach vorne gerichtet ist.

9. Steuerungssystem (2) nach einem der vorhergehenden Ansprüche, ferner umfassend
eine achte Radarsensorvorrichtung (12), die an der Vorderseite des Fahrzeugs (1) so angebracht ist, dass sie in einem weiten Winkel nach vorne gerichtet ist.

10. Steuerungssystem (2) nach einem der vorhergehenden Ansprüche, wobei
das Steuerungssystem (2) dazu ausgelegt ist, von den Sensorvorrichtungen (3 bis 12) erkannte Objektinformationen zu verwenden, um das Fahrzeug (1) abzubremsen oder anzuhalten oder einen Spurwechsel mit dem Fahrzeug (1) auszuführen, wenn ein Objekt in einem bestimmten Sichtfeld der Sensorvorrichtungen erkannt wird.

## Revendications

1. Système (2) de commande pour la conduite autonome d'un véhicule (1), comprenant
un premier dispositif (3) capteur radar comme dispositif capteur principal fixé à un côté avant du véhicule (1), de manière à ce qu'il regarde vers l'avant,
un deuxième dispositif (3') capteur radar comme dispositif capteur de secours fixé au côté avant du véhicule (1), de manière à ce qu'il regarde vers l'avant,
un troisième dispositif (4) capteur radar comme dispositif capteur principal fixé à un premier côté latéral du véhicule (1), de manière à ce qu'il regarde vers le côté,
un quatrième dispositif (4') capteur radar comme dispositif capteur principal fixé à un second côté latéral du véhicule (1), de manière à ce qu'il regarde vers le côté,
un cinquième dispositif (5) capteur radar comme dispositif capteur principal fixé au premier côté latéral du véhicule (1), de manière à ce qu'il regarde vers l'arrière,
un sixième dispositif (5') capteur radar comme dispositif capteur principal fixé au second côté latéral du véhicule (1), de manière à ce qu'il regarde vers l'arrière,
un premier dispositif (6) capteur à caméra comme dispositif capteur principal fixé au côté avant du véhicule (1), de manière à ce qu'il regarde vers l'avant,
un deuxième dispositif (6') capteur à caméra comme dispositif capteur de secours fixé au côté avant du véhicule (1), de manière à ce qu'il regarde vers l'avant,
un troisième dispositif (7) capteur à caméra comme dispositif capteur principal fixé au premier côté latéral du véhicule (1), de manière à ce qu'il regarde vers l'arrière, et
un quatrième dispositif (7') capteur à caméra comme dispositif capteur principal fixé au second côté latéral du véhicule (1), de manière à ce qu'il regarde vers l'arrière, dans lequel
le premier dispositif (3) capteur radar et le deuxième dispositif (3') capteur radar sont configurés pour être alimentés par des circuits de batterie indépendants l'un de l'autre, de manière à être des dispositifs redondants, et
le premier dispositif (6) capteur à caméra et le deuxième dispositif (6') capteur à caméra sont configurés pour être alimentés par des circuits de batterie indépendants l'un de l'autre, de manière à être des dispositifs redondants,
dans lequel le système (2) de commande est pourvu d'un circuit principal ayant les dispositifs capteurs principaux et d'un circuit de secours moins sophistiqué ayant les dispositifs de capteurs de secours,
**caractérisé en ce que**
les dispositifs capteurs principaux sont configurés pour fournir des premières données de scène véhiculaires à une première unité de traitement, afin de déterminer des premières données de commande véhiculaires sur la base des premières données de scène véhiculaires, pour permettre au véhicule (1) de se conduire d'une manière autonome, et les dispositifs capteurs de secours fournissent des deuxièmes données de scène véhiculaires à une deuxième unité de traitement, pour déterminer des deuxièmes données de commande véhiculaires sur la base des deuxièmes données de scène véhiculaires, pour effectuer une manœuvre de sécurité, de manière à ce que le véhicule (1) puisse effectuer une manœuvre de sécurité nécessaire si l'un des circuits est défaillant.

2. Système (2) de commande suivant la revendication 1, dans lequel
le troisième dispositif (4) capteur radar est fixé à un côté latéral de conducteur du véhicule (1), de manière à ce qu'il regarde vers le côté,
il est prévu au moins deux quatrièmes dispositifs (4', 4") capteurs radars fixés à un côté latéral de co-conducteur du véhicule (1), de manière à ce qu'ils regardent vers le côté,
le cinquième dispositif (5) capteur radar est fixé au côté latéral du conducteur du véhicule, de manière à ce qu'il regarde vers l'arrière,
il est prévu au moins deux sixièmes dispositifs (5', 5") capteurs radars fixés au côté latéral du co-conducteur du véhicule (1), de manière à ce qu'ils regardent vers l'arrière, dans lequel
au moins l'un des au moins deux quatrièmes dispositifs (4', 4") capteurs radars est configuré pour être alimenté par un circuit de batterie indépendant du circuit de batterie d'un autre des au moins deux quatrièmes dispositifs (4', 4") capteurs radars, de manière à être des dispositifs redondants,
au moins l'un des au moins deux sixièmes dispositifs (5', 5'') capteurs radars est configuré pour être alimenté par un circuit de batterie indépendant du circuit de batterie d'un autre des au moins deux sixièmes dispositifs (5', 5") capteurs radars, de manière à être des dispositifs redondants.

3. Système (2) de commande suivant la revendication 1 ou 2, comprenant en outre
un premier dispositif (8) capteur à caméra à lentille fisheye fixé à un premier coin avant du véhicule (1), de manière à ce qu'il regarde vers le bas, et
un deuxième dispositif (8') capteur à caméra à lentille fischeye fixé à un second coin avant du véhicule (1), de manière à ce qu'il regarde vers le bas.

4. Système (2) de commande suivant la revendication 3, dans lequel
le troisième dispositif (7) capteur à caméra est fixé au côté latéral du conducteur du véhicule (1), de manière à ce qu'il regarde vers l'arrière, et
il est prévu au moins deux quatrièmes dispositifs (7', 7") capteur à caméra fixés au côté latéral du co-conducteur du véhicule (1), de manière à ce qu'ils regardent vers l'arrière,
le premier dispositif (8) capteur à caméra à lentille fisheye est fixé à un coin avant du côté du conducteur du véhicule (1), de manière à ce qu'il regarde vers le bas, et
il est prévu au moins deux deuxièmes dispositifs (8', 8") capteurs à caméra à lentille fischeye fixés au coin avant du côté du co-conducteur du véhicule (1), de manière à ce qu'ils regardent vers le bas, dans lequel
au moins l'un des au moins deux quatrièmes dispositifs (7', 7") capteurs à caméra est configuré pour être alimenté par un circuit de batterie indépendant du circuit de batterie d'un autre des au moins deux quatrièmes dispositifs (7', 7") capteurs à caméra, de manière à être des dispositifs redondants, et
au moins l'un des au moins deux dispositifs (8', 8") capteurs à caméra à lentille fischeye est configuré pour être alimenté par un circuit de batterie indépendant du circuit de batterie d'un autre des au moins deux deuxièmes dispositifs (8', 8") capteurs à caméra à lentille fisheye, de manière à être des dispositifs redondants.

5. Système (2) de commande suivant l'une quelconque des revendications précédentes, comprenant en outre
un premier dispositif (9) capteur lidar rotationnel fixé au premier côté latéral du véhicule (1), et
un deuxième dispositif (9') capteur lidar rotationnel fixé au second côté latéral du véhicule (1), dans lequel le premier dispositif (9) capteur lidar rotationnel et le deuxième dispositif (9') capteur lidar rotationnel sont configurés respectivement pour regarder vers le côté et vers l'avant.

6. Système (2) de commande suivant l'une quelconque des revendications 1 à 4, comprenant en outre
trois dispositifs capteurs lidar à semiconducteur respectivement un dispositif lidar à semiconducteur étant fixés au premier côté latéral, au côté avant du véhicule (1) et au second côté latéral.

7. Système (2) de commande suivant l'une quelconque des revendications précédentes, comprenant en outre
un septième dispositif (10) capteur radar fixé au véhicule (1), de manière à regarder vers l'arrière en-dessous du véhicule (1) .

8. Système (2) de commande suivant l'une quelconque des revendications précédentes, comprenant en outre
un dispositif capteur (11) à ultrasons fixé à un côté avant du véhicule (1), de manière à ce qu'il regarde vers l'avant.

9. Système (2) de commande suivant l'une quelconque des revendications précédentes, comprenant en outre
un huitième dispositif (12) capteur radar fixé au côté avant du véhicule (1), de manière à ce qu'il regarde vers l'avant, suivant un grand angle.

10. Système (2) de commande suivant l'une quelconque des revendications précédentes, dans lequel
le système (2) de commande est configuré pour utiliser de l'information d'objet détecté par les dispositifs (3 à 12) capteurs pour décélérer ou arrêter le véhicule (1) ou pour exécuter un changement de file par le véhicule (1), lorsqu'un objet est détecté dans un champ de vue spécifique des dispositifs capteurs.
